# EUROPÄISCHE PATENTSCHRIFT

(11) **EP 3 064 839 B1**
(45) Veröffentlichungstag und Bekanntmachung des Hinweises auf die Patenterteilung: **08.05.2019**
(21) Anmeldenummer: 16157790.3
(22) Anmeldetag: 29.02.2016
(51) Int. Cl.: F24C 7/08, A47J 27/14, A47J 36/16

(54) **BAUGRUPPE UMFASSEND EINE TIEGELABTRENNUNG UND EIN GARGERÄT**
ASSEMBLY COMPRISING A CRUCIBLE SEPARATION AND A COOKING DEVICE
ENSEMBLE COMPRENANT UNE SEPARATION DE CREUSET ET UN APPAREIL DE CUISSON

(30) Priorität: 04.03.2015 DE 102015103163
(43) Veröffentlichungstag der Anmeldung: 07.09.2016
(73) Patentinhaber: RATIONAL International AG, 9435 Heerbrugg (CH)
(72) Erfinder: Lingenheil, Markus, 79206 Breisach (DE); Walleser, Sven, 68100 Mulhouse (FR)
(74) Vertreter: Prinz & Partner mbB

(56) Entgegenhaltungen:
- EP-A1- 2 649 914
- DE-A1-102009 047 013
- DE-A1-102010 062 504
- DE-A1-102011 120 280
- DE-A1-102012 011 679
- US-A1- 2009 096 617

## Beschreibung

Die Erfindung betrifft eine Baugruppe umfassend eine Tiegelabtrennung und ein Gargerät mit einem tiegelartigen Garbehälter.

Gargeräte mit tiegelartigen Garbehältern können in Restaurants und der Großgastronomie eingesetzt werden, um große Speisenmengen zuzubereiten. Eine Ausführungsform eines solchen Gargeräts ist am Markt unter der Bezeichnung "VarioCooking Center" bekannt. Der Boden des Garbehälters ist mit mehreren Heizvorrichtungen versehen, sodass die Wärmeübertragung zu den Nahrungsmitteln in der Form von Kontaktwärme vom Boden erfolgt. Auf dem Boden des Gargeräts können beispielsweise Steaks angebraten werden, oder es kann im Garbehälter eine Suppe zubereitet werden.

Aus der DE 10 2012 007 216 A1 ist außerdem bekannt, dass der Garbehälter eines solchen Gargeräts mittels einer Tiegelabtrennung in unterschiedliche Garzonen unterteilt werden kann. Beispielsweise kann dann in einem Teilbereich mit einer Flüssigkeit gearbeitet werden, beispielsweise Suppe zubereitet werden, während in anderen Bereichen mit Kontaktwärme gearbeitet wird, um beispielsweise Steaks anzubraten. Somit kann das Gargerät flexibler genutzt werden.

In der US 2009/096617 A1 ist ein tiegelartiger Garbehälter mit einem drahtlosen Überwachungssystem gezeigt, mittels dem die Temperatur der Speisen im Garbehälter überwacht werden kann.

Aus der DE 10 2010 062 504 A1 und der DE 2009 047 013 A1 sind Gargeräte, beispielsweise Backöfen, bekannt, welche Gargutträger mit Temperatursensoren aufweisen, die dafür vorgesehen sind, das Gargut auf den Gargutträgern zu überwachen.

Die Aufgabe der Erfindung besteht darin, die Flexibilität des Gargeräts weiter zu erhöhen und einem Nutzer zusätzliche Anwendungsmöglichkeiten zur Verfügung zu stellen.

Zur Lösung dieser Aufgabe ist erfindungsgemäß eine Baugruppe umfassend eine Tiegelabtrennung und ein Gargerät vorgesehen. Das Gargerät umfasst einen tiegelartigen Garbehälter, eine Steuerung und ein Empfängermodul. Die Tiegelabtrennung ist eine Trennwand, die sich von einer Seitenwand des Garbehälters zur gegenüberliegenden Seitenwand erstreckt und am Boden des Garbehälters anliegt, wobei die Tiegelabtrennung eine sich in vertikaler Richtung erstreckende, physische Trennung zwischen Teilbereichen im Inneren des Garbehälters bildet, die sich auf der einen und der anderen Seite der Tiegelabtrennung befinden. Die Tiegelabtrennung ist dabei eine in den Garbehälter einsetzbare und entfernbare Trennwand. Ferner ist die Tiegelabtrennung mit mindestens einem Sensor für einen Umgebungsparameter versehen und mit einem Sendemodul, mit dem ein Sensorsignal abgegeben werden kann. Das Empfängermodul ist ausgebildet, das Sensorsignal zu empfangen, das von dem Sendemodul stammt. Die Erfindung beruht auf dem Grundgedanken, die Tiegelabtrennung dafür zu verwenden, einen Umgebungsparameter zu erfassen. Dieser Umgebungsparameter ist, da die Tiegelabtrennung innerhalb des Garbehälters angeordnet ist, ein Parameter, der für einen vom Gargerät gesteuerten Garprozess relevant ist. Da der Sensor in der Tiegelabtrennung angeordnet ist, kann unmittelbar ein Umgebungsparameter eines Garbereichs erfasst werden, der von der Tiegelabtrennung erzeugt wird. Auch wenn mehrere Tiegelabtrennungen verwendet werden, kann der Sensor den jeweils relevanten Umgebungsparameter erfassen. Aufgrund des Sendemoduls gibt es keinerlei Handhabungsprobleme mit Kabeln, etc., da das Sensorsignal kabellos zum Empfängermodul des Gargeräts übertragen wird.

Gemäß einer bevorzugten Ausführungsform ist vorgesehen, dass der Sensor ein Temperatursensor ist. Auf diese Weise kann als Umgebungsparameter der wichtigste Parameter bei einem Garprozess erfasst werden.

Alternativ könnte grundsätzlich auch vorgesehen sein, dass Feuchtewerte und/oder ein oder mehrere andere Parameter erfasst werden.

Gemäß einer Ausgestaltung der Erfindung ist vorgesehen, dass der Sensor in einer Wand der Tiegelabtrennung angeordnet ist. Dies ermöglicht, den Temperaturwert an einem Punkt zu erfassen, der durch die Anordnung des Temperatursensors in der Wand der Tiegelabtrennung vorgegeben ist.

Wenn der Temperatursensor sehr nahe am unteren Rand der Tiegelabtrennung angeordnet ist, wird eine Temperatur erfasst, die knapp oberhalb des Bodens des Garbehälters herrscht. Wenn der Sensor weiter oben in der Wand angeordnet ist, kann beispielsweise die Temperatur einer sich im entsprechenden Garbereich befindenden Flüssigkeit erfasst werden.

Gemäß einer Ausgestaltung der Erfindung ist vorgesehen, dass der Sensor in einem Kerntemperaturfühler angeordnet ist, der mittels eines Kabels mit dem Sendemodul verbunden ist. Bei dieser Ausgestaltung bietet die Tiegelabtrennung einen eigenen Kerntemperaturfühler, der in Gargut eingesteckt werden kann, das sich innerhalb des abgetrennten Garbereichs befindet. Somit steht, wenn mehrere Tiegelabtrennungen verwendet werden, für jeden Garbereich ein eigener Kerntemperaturfühler zur Verfügung.

Vorzugsweise ist dabei an einer Wand der Tiegelabtrennung eine Halterung für den Kerntemperaturfühler vorgesehen. Hierdurch ist gewährleistet, dass der Kerntemperaturfühler aufgeräumt ist, wenn er nicht benutzt wird.

Vorzugsweise ist ein aufladbarer Energiespeicher vorgesehen, beispielsweise ein Akkumulator oder ein Kondensator, der dem Sensor und dem Sendemodul die nötige elektrische Energie zur Verfügung stellt. Der Energiespeicher ist dabei vorzugsweise innerhalb der Tiegelabtrennung gekapselt, sodass es keinerlei Probleme mit Flüssigkeiten und Feuchtigkeit gibt, die im Betrieb oder bei der Reinigung auf die Tiegelabtrennung einwirken können.

Gemäß einer Ausgestaltung der Erfindung ist vorgesehen, dass der Energiespeicher kabellos geladen werden kann, insbesondere mittels einer Ladespule. Diese ist vorzugsweise ebenfalls gekapselt in die Tiegelabtrennung integriert und ermöglicht es, den aufladbaren Energiespeicher berührungslos aufzuladen.

Gemäß einer Ausgestaltung der Erfindung ist der Tiegelabtrennung eine Identifikationskodierung zugeordnet, die vom Sendemodul gesendet werden kann. Hierdurch ist gewährleistet, dass das Empfängermodul die unterschiedlichen Signale, die in einem Betriebszustand mit mehreren Tiegelabtrennungen empfangen werden, eindeutig zugeordnet werden können. Auf diese Weise lassen sich die unterschiedlichen Garbereiche in Abhängigkeit von den empfangenen Signalen individuell ansteuern.

Vorzugsweise ist vorgesehen, dass dem Garbehälter mehrere Heizvorrichtungen zugeordnet sind, die von der Steuerung separat angesteuert werden können. Hierdurch können die unterschiedlichen Garbereiche mit unterschiedlichen Temperaturen betrieben werden.

Gemäß einer Ausgestaltung der Erfindung ist vorgesehen, dass die Steuerung ein Positionsbestimmungsmodul enthält, mit dem die Position einer erkannten Tiegelabtrennung innerhalb des Garbehälters erkannt werden kann. Hierdurch kann die Steuerung die einzelnen Heizvorrichtungen flexibel den mit der Tiegelabtrennung oder den mehreren Tiegelabtrennungen gebildeten Garbereichen zuordnen und entsprechend ansteuern.

Gemäß einer Ausgestaltung der Erfindung eine Halterung für die Tiegelabtrennung vorgesehen, wobei die Halterung eine Induktionsspule aufweist, mit der die Ladespule einer in der Halterung angeordneten Tiegelabtrennung zusammenwirken kann. Dies ermöglicht, den Energiespeicher der Tiegelabtrennung automatisch immer dann zu laden, wenn die Tiegelabtrennung nicht benutzt wird und sich aufgeräumt in der Halterung befindet.

Die Erfindung wird nachfolgend anhand verschiedener Ausführungsformen beschrieben, die in den beigefügten Zeichnungen dargestellt sind. In diesen zeigen:
- Figur 1 in einer schematischen, perspektivischen Ansicht ein Gargerät mit tiegelförmigem Garbehälter, in welchem eine Tiegelabtrennung angeordnet ist;
- Figur 2 in einer schematischen Seitenansicht die in Figur 1 verwendete Tiegelabtrennung;
- Figur 3 schematisch ein Gargerät, in das mehrere Tiegelabtrennungen eingesetzt sind; und
- Figur 4 schematisch eine Halterung für eine Tiegelabtrennung.

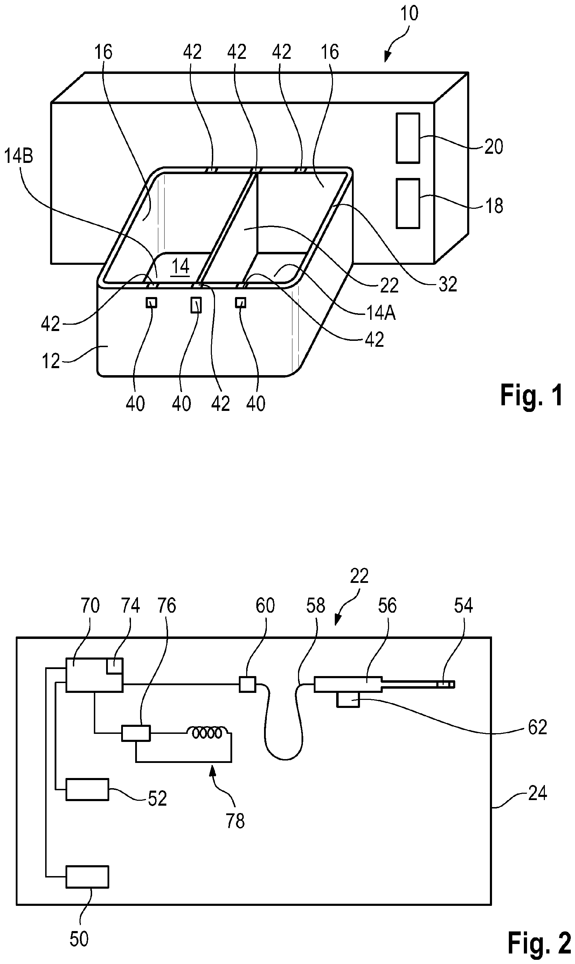

In Figur 1 ist schematisch ein Gargerät 10 gezeigt, das einen tiegelförmigen Garbehälter 12 aufweist. Dieser weist einen Boden 14 auf sowie insgesamt vier Seitenwände 16, von denen in Figur 1 nur zwei zu sehen sind und die insgesamt einen Garraum definieren.

Dem Boden 14 sind mehrere Heizvorrichtung zugeordnet, die schematisch als Heizvorrichtung 14A und Heizvorrichtung 14B gezeigt sind. Diese können von einer hier schematisch angedeuteten Steuerung 18 angesteuert werden. Die Steuerung 18 kann unterschiedliche Garprozesse ablaufen lassen, die von einem Bediener über eine schematisch gezeigte Bedieneinheit 20 angewählt werden können. Dabei können die Heizvorrichtungen 14A, 14B individuell angesteuert werden, sodass der Boden 14 in unterschiedlichen Heizzonen unterteilt werden kann, die mit unterschiedlichen Temperaturen betrieben werden können.

In das Innere des tiegelförmigen Garbehälters 12 ist eine Tiegelabtrennung 22 eingesetzt, bei der es sich allgemein ausgedrückt um eine nach Bedarf einsetzbare und entfernbare Trennwand handelt, die sich bei der gezeigten Ausführungsform von einer Seitenwand 16 zur gegenüberliegenden Seitenwand erstreckt und am Boden 14 anliegt. Die Tiegelabtrennung bildet eine sich in vertikaler Richtung erstreckende, physische Trennung zwischen den Teilbereichen im Inneren des Garbehälters 12, die sich auf der einen und der anderen Seite der Tiegelabtrennung 22 befinden. Bei der in Figur 1 gezeigten Ausführungsform ist der Innenraum des Garbehälters 12 also in zwei annähernd gleich große Teilbereiche unterteilt, die sich auf der rechten und der linken Seite der Tiegelabtrennung 22 befinden.

Die Tiegelabtrennung 22 weist einen plattenförmigen Körper 24 auf, der vorzugsweise aus Blech besteht. Entlang dreier Außenränder des Körpers 24 ist eine (hier nicht dargestellte) Dichtung angeordnet, mit der die Tiegelabtrennung am Boden und an den Seitenwänden des Garbehälters 12 dicht anliegen kann.

Die Dichtung kann in ihren Abmessungen veränderbar sein, beispielsweise aufblasbar, um die Tiegelabtrennung 22 fest und zuverlässig abdichtend im Garbehälter 12 verspannen zu können. Alternativ oder zusätzlich können Magnete vorgesehen sein, die eine Anziehungskraft zwischen Tiegelabtrennung 22 und Garbehälter 12 erzeugen. Es können auch Verriegelungshebel vorgesehen sein, mit denen die Tiegelabtrennung 22 mechanisch am Garbehälter 12 befestigt werden kann.

Die Tiegelabtrennung 22 weist mehrere Sensoren 50, 52, 54 auf, mit denen Umgebungsparameter erfasst werden können. Beim gezeigten Ausführungsbeispiel handelt es sich bei den Sensoren um Temperatursensoren 50, 52, 54.

Der Temperatursensor 50 ist in der Nähe des unteren Randes der Tiegelabtrennung 22 angeordnet, sodass er, wenn die Tiegelabtrennung 22 in den Garbehälter 12 eingesetzt ist, eine Temperatur in der Nähe des Bodens 14 des Garbehälters 12 erfasst.

Der Temperatursensor 52 ist in einem gewissen Abstand vom unteren Rand der Tiegelabtrennung 22 angeordnet, sodass er beispielsweise die Temperatur einer Suppe erfassen kann, die sich in einem mittels der Tiegelabtrennung abgetrennten Garbereich innerhalb des Garbehälters 12 befindet.

Es ist auch möglich, dass zwei Sensoren 50 und/oder zwei Sensoren 52 vorgesehen sind, die die Temperatur auf jeweils einer Seite der Tiegelabtrennung erfassen.

Der Temperatursensor 54 befindet sich an einem Kerntemperaturfühler 56, der über ein Kabel 58 mit einem Anschluss 60 verbunden ist, der am Körper 24 der Tiegelabtrennung 22 vorgesehen ist. Für den Kerntemperaturfühler 56 ist eine Halterung 62 vorgesehen, die hier nur schematisch gezeigt ist. Es kann sich beispielsweise um eine Magnethalterung, eine Aufnahme, einen Federclips oder Ähnliches handeln.

Alternativ zur Anbindung des Kerntemperaturfühler 56 mittels des Kabels 58 kann auch ein kabelloser Kerntemperaturfühler verwendet werden.

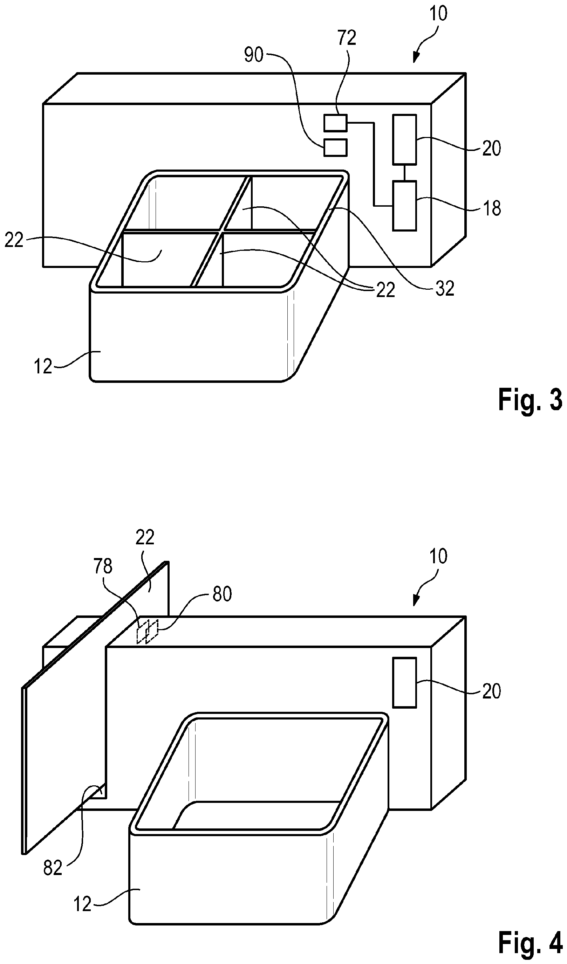

In die Tiegelabtrennung 22 ist ein Sendemodul 70 integriert, an das die Sensoren 50, 52, 54 angeschlossen sind. Das Sendemodul kann drahtlos eine Information, die den Messwert mindestens eines der Sensoren 50, 52, 54 darstellt, an ein Empfängermodul 74 (siehe Figur 3) übertragen, das am Gargerät 10 angeordnet ist. Das Empfängermodul 72 steht dabei mit der Steuerung 18 in Verbindung.

Das Sendemodul 70 zusammen mit dem Empfängermodul 72 ermöglicht, dass der Steuerung 18 Informationen über die Temperatur vorliegen, die von den Sensoren 50, 52, 54 erfasst werden. Das vom Sendemodul 70 gesendete Signal ist dabei so codiert, dass die Steuerung unterscheiden kann, zu welchem der Sensoren das entsprechende Signal gehört.

Die Tiegelabtrennung 22 ist ferner mit einer Identifikationscodierung 74 versehen, die hier schematisch dem Sendemodul 70 zugeordnet ist. Das Sendemodul 70 kann die Identifikationscodierung 74 ebenfalls an die Steuerung 18 übermitteln, sodass, wenn mehrere Tiegelabtrennungen 22 verwendet werden, der Steuerung 18 bekannt ist, von welcher Tiegelabtrennung 22 die entsprechenden Signale stammen.

Eine solche Konfiguration, bei der innerhalb des Garbehälters 12 mehrere Tiegelabtrennungen 22 angeordnet sind, ist schematisch in Figur 3 gezeigt.

Um erkennen zu können, wo sich die Tiegelabtrennung 22 innerhalb des Garbehälters 12 befindet, sind am Garbehälter 12 mehrere Positionserfassungsvorrichtungen 40 (siehe Figur 1) vorgesehen, die beispielsweise als Reed-Kontakte ausgeführt und von der Steuerung 18 abgefragt werden können. Dies ermöglicht es der Steuerung 18, die verschiedenen Heizvorrichtungen entsprechend der gebildeten Garbereiche intern zu gruppieren. Zusätzlich können Positionsmarkierungen 42 vorgesehen sein, die einem Benutzer bevorzugte Positionen für die Tiegelabtrennung 22 innerhalb des Garbehälters 12 anzeigen.

Bei dem in Figur 1 gezeigten Ausführungsbeispiel werden die Heizvorrichtungen insgesamt in zwei Gruppen unterteilt, hier die Heizvorrichtung 14A und 14B, wobei die Trennung zwischen den Heizvorrichtungen 14A, 14B entsprechend der Anordnung der Tiegelabtrennung 22 mittig durch den Garbehälter verläuft. Wenn die Tiegelabtrennung 22 gegenüber der in Figur 1 gezeigten Position weiter rechts oder weiter links angeordnet ist, werden die Heizvorrichtungen zu Untergruppen mit unterschiedlicher Fläche zusammengefasst.

Zur Energieversorgung des Sendemoduls 70 und auch der Sensoren 50, 52, 54 ist ein Energiespeicher 76 vorgesehen, der beispielsweise als Kondensator oder Akkumulator ausgeführt sein kann. Die Kapazität des Energiespeichers ist so bemessen, dass das Sendemodul 70 und die Sensoren 50, 52, 54 auch über einen längeren Garvorgang von mehreren Stunden zuverlässig mit Energie versorgt werden können.

Der Energiespeicher 76 kann kabellos geladen werden. Beim hier gezeigten Ausführungsbeispiel ist hierfür eine schematisch dargestellte Ladespule 78 vorgesehen, mit welcher der Energiespeicher 76 induktiv aufgeladen werden kann.

Mit der Ladespule 78 kann eine Induktionsspule 80 zusammenwirken, die einer Halterung 82 für die Tiegelabtrennung 22 zugeordnet ist. In der Halterung 82 kann die Tiegelabtrennung 22 angeordnet werden, wenn sie gerade nicht in Benutzung ist. In diesem Fall kann dann automatisch der Energiespeicher 76 induktiv geladen werden.

Ein Beispiel für eine solche Halterung ist in Figur 4 gezeigt. Hier ist die Halterung 82 seitlich in das Gehäuse des Gargeräts 10 integriert. Abweichend von der gezeigten Ausführungsform können auch nebeneinander mehrere Halterungen 82 vorgesehen sein. Es ist auch möglich, die Halterungen als separate, aneinandersteckbare Module auszuführen, um das Gargerät 10 entsprechend den Bedürfnissen erweitern zu können.

Wie in Figur 3 zu sehen ist, können auch mehrere Tiegelabtrennungen 22 in den Garbehälter 12 eingesetzt werden.

Ergänzend zu den Positionserkennungsvorrichtungen 40 oder alternativ zu diesen kann das Gargerät 10 auch mit einem Positionsbestimmungsmodul 90 versehen sein, das schematisch in Figur 3 gezeigt ist. Mit diesem kann berührungslos erfasst werden, wo die Tiegelabtrennungen 22 innerhalb des Garbehälters 12 angeordnet sind, beispielsweise mittels Ultraschall.

Die von den Temperatursensoren 50, 52, 54 erfassten Signale werden in einer geeigneten Schaltung zwischengespeichert. Die Daten werden dann mithilfe des Sendemoduls 70 an das Empfängermodul 72 gesendet.

Das Sendemodul 70 verfügt über eine geeignete Schaltung, mit der das Sensorsignal geeignet verarbeitet werden kann, beispielsweise mithilfe einer Oszillatorstufe in ein moduliertes Signal umgewandelt werden kann, das dann kabellos gesendet wird.

Das Sendemodul 70 kann die Signale der Sensoren 50, 52, 54 beispielsweise in regelmäßigen Abständen senden, sodass die Steuerung 18 den Verlauf der relevanten Temperaturen erfasst. Es ist auch möglich, dass die Steuerung 18 einen Sendevorgang auslöst, beispielsweise wenn zu bestimmten Zeitpunkten eines Garprozesses es notwendig ist, Informationen über die aktuelle Temperatur zu haben.

Mit den jeweils aktuell verfügbaren Temperaturwerten ist es der Steuerung 18 des Gargerätes 10 möglich, unterschiedliche Garprozesse in den unterschiedlichen Garbereichen zu steuern. Aufgrund der verfügbaren Temperaturinformation kann ein Regelkreis gebildet sein, der eine Temperatur in einem Garbereich des Garbehälters 12 regelt.

## Patentansprüche

1. Baugruppe umfassend eine Tiegelabtrennung (22) und ein Gargerät (10), wobei das Gargerät (10) einen tiegelartigen Garbehälter (12) umfasst, wobei die Tiegelabtrennung (22) eine in den Garbehälter (12) einsetzbare und entfernbare Trennwand ist, die sich von einer Seitenwand (16) des Garbehälters (12) zur gegenüberliegenden Seitenwand (16) erstreckt und am Boden (14) des Garbehälters (12) anliegt, wobei die Tiegelabtrennung (22) eine sich in vertikaler Richtung erstreckende, physische Trennung zwischen Teilbereichen im Inneren des Garbehälters (12) bildet, die sich auf der einen und der anderen Seite der Tiegelabtrennung (22) befinden, **dadurch gekennzeichnet, dass** das Gargerät (10) weiterhin eine Steuerung (18) und ein Empfängermodul (72) umfasst, und die Tiegelabtrennung (22) mit mindestens einem Sensor (50, 52, 54) für einen Umgebungsparameter versehen ist und mit einem Sendemodul (70), mit dem ein Sensorsignal abgegeben werden kann, wobei das Empfängermodul (72) ausgebildet ist, das Sensorsignal zu empfangen, das von dem Sendemodul (70) stammt.

2. Baugruppe nach Anspruch 1, **dadurch gekennzeichnet, dass** der Sensor ein Temperatursensor (50, 52, 54) ist.

3. Baugruppe nach Anspruch 2, **dadurch gekennzeichnet, dass** der Sensor (50, 52, 54) in einer Wand der Tiegelabtrennung angeordnet ist.

4. Baugruppe nach Anspruch 2, **dadurch gekennzeichnet, dass** der Sensor in einem Kerntemperaturfühler (56) angeordnet ist, der mittels eines Kabels (58) mit dem Sendemodul (70) verbunden ist.

5. Baugruppe nach Anspruch 4, **dadurch gekennzeichnet, dass** an einer Wand der Tiegelabtrennung (22) eine Halterung (62) für den Kerntemperaturfühler (56) vorgesehen ist.

6. Baugruppe nach einem der vorhergehenden Ansprüche, **dadurch gekennzeichnet, dass** die Tiegelabtrennung (22) einen aufladbaren Energiespeicher (76) umfasst.

7. Baugruppe nach Anspruch 6, **dadurch gekennzeichnet, dass** der Energiespeicher (76) kabellos geladen werden kann, insbesondere mittels einer Ladespule (78).

8. Baugruppe nach einem der vorhergehenden Ansprüche, **dadurch gekennzeichnet, dass** der Tiegelabtrennung (22) eine Identifikationscodierung (74) zugeordnet ist, die vom Sendemodul (70) gesendet werden kann.

9. Baugruppe nach einem der vorhergehenden Ansprüche, **dadurch gekennzeichnet, dass** dem Garbehälter (12) mehrere Heizvorrichtungen (14A, 14B) zugeordnet sind, die von der Steuerung (18) separat angesteuert werden können.

10. Baugruppe nach einem der vorhergehenden Ansprüche, **dadurch gekennzeichnet, dass** die Steuerung (18) ein Positionsbestimmungsmodul (72) enthält, mit dem die Position einer erkannten Tiegelabtrennung (22) innerhalb des Garbehälters (12) erkannt werden kann.

11. Baugruppe nach einem der vorhergehenden Ansprüche, **dadurch gekennzeichnet, dass** eine Halterung (82) für die Tiegelabtrennung (22) vorgesehen ist, wobei die Halterung (82) mit einer Vorrichtung zum kabellosen Laden versehen ist, insbesondere mit einer Induktionsspule (80), die mit der Ladespule (78) einer in der Halterung (82) angeordneten Tiegelabtrennung (22) zusammenwirken kann.

## Claims

1. An assembly comprising a pan partition (22) and a cooking appliance (10), the cooking appliance (10) comprising a pan-like cooking container (12), the pan partition (22) being a partition wall which is insertable in the cooking container (12) and is removable, extends from one side wall (16) of the cooking container (12) to the opposite side wall (16) and rests against the bottom (14) of the cooking container (12), the pan partition (22) forming a physical separation, extending in the vertical direction, between partial areas in the interior of the cooking container (12) which are located on one side and the other side of the pan partition (22), **characterized in that** the cooking appliance (10) further comprises a controller (18) and a receiver module (72) and the pan partition (22) is provided with at least one sensor (50, 52, 54) for an environmental parameter and with a transmitting module (70) by which a sensor signal can be output, the receiver module (72) being configured to receive the sensor signal originating from the transmitting module (70).

2. The assembly according to claim 1, **characterized in that** the sensor is a temperature sensor (50, 52, 54).

3. The assembly according to claim 2, **characterized in that** the sensor (50, 52, 54) is arranged in a wall of the pan partition.

4. The assembly according to claim 2, **characterized in that** the sensor is arranged in a core temperature sensing element (56) which is connected to the transmitting module (70) by means of a cable (58).

5. The assembly according to claim 4, **characterized in that** a holder (62) for the core temperature sensing element (56) is provided on a wall of the pan partition (22).

6. The assembly according to any of the preceding claims, **characterized in that** the pan partition (22) comprises a rechargeable energy storage (76).

7. The assembly according to claim 6, **characterized in that** the energy storage (76) can be charged cordlessly, in particular by means of a charging coil (78).

8. The assembly according to any of the preceding claims, **characterized in that** the pan partition (22) has an identification coding (74) associated therewith which can be transmitted by the transmitting module (70).

9. The assembly according to any of the preceding claims, **characterized in that** the cooking container (12) has a plurality of heating devices (14A, 14B) associated therewith which can be driven separately by the controller (18).

10. The assembly according to any of the preceding claims, **characterized in that** the controller (18) contains a position finding module (72) by which the position of a detected pan partition (22) within the cooking container (12) can be detected.

11. The assembly according to any of the preceding claims, **characterized in that** a holder (82) for the pan partition (22) is provided, the holder (82) being provided with a device for cordless charging, in particular with an induction coil (80) which can cooperate with the charging coil (78) of a pan partition (22) arranged in the holder (82).

## Revendications

1. Ensemble comprenant une séparation de poêlon (22) et un appareil de cuisson (10), l'appareil de cuisson (10) comprenant un récipient de cuisson (12) en forme de poêlon, la séparation de poêlon (22) étant une paroi de séparation qui est apte à être insérée dans le récipient de cuisson (12) et à être retirée, qui s'étend depuis une paroi latérale (16) du récipient de cuisson (12) vers la paroi latérale (16) opposée et qui repose sur le fond (14) du récipient de cuisson (12), la séparation de poêlon (22) formant une délimitation physique qui s'étend dans le sens vertical entre des zones partielles à l'intérieur du récipient de cuisson (12) lesquelles se trouvent d'une part et d'autre part de la séparation de poêlon (22), caractérisé en ce l'appareil de cuisson (10) comprend en outre une commande (18) et un module de réception (72), et en ce que la séparation de poêlon (22) est pourvue d'au moins un capteur (50, 52, 54) pour un paramètre d'environnement et d'un module d'émission (70) au moyen duquel un signal de capteur peut être sorti, le module de réception (72) étant réalisé de manière à recevoir le signal de capteur provenant du module d'émission (70).

2. Ensemble selon la revendication 1, **caractérisé en ce que** le capteur est un capteur de température (50, 52, 54).

3. Ensemble selon la revendication 2, **caractérisé en ce que** le capteur (50, 52, 54) est agencé dans une paroi de la séparation de poêlon.

4. Ensemble selon la revendication 2, **caractérisé en ce que** le capteur est agencé dans un détecteur de température à coeur (56) qui est relié au module d'émission (70) par un câble (58).

5. Ensemble selon la revendication 4, **caractérisé en ce qu'**un support (62) pour le détecteur de température à coeur (56) est prévu sur une paroi de la séparation de poêlon (22).

6. Ensemble selon l'une des revendications précédentes, **caractérisé en ce que** la séparation de poêlon (22) comprend un réservoir d'énergie (76) rechargeable.

7. Ensemble selon la revendication 6, **caractérisé en ce que** le réservoir d'énergie (76) peut être chargé sans câble, en particulier au moyen d'une bobine de charge (78).

8. Ensemble selon l'une des revendications précédentes, **caractérisé en ce qu'**un codage d'identification (74) qui peut être émis par le module d'émission (70) est associé à la séparation de poêlon (22).

9. Ensemble selon l'une des revendications précédentes, **caractérisé en ce que** plusieurs dispositifs de chauffage (14A, 14B) qui sont aptes à être commandés séparément par la commande (18) sont associés au récipient de cuisson (12).

10. Ensemble selon l'une des revendications précédentes, **caractérisé en ce que** la commande (18) contient un module de détermination de position (72) au moyen duquel la position d'une séparation de poêlon (22) identifiée à l'intérieur du récipient de cuisson (12) peut être identifiée.

11. Ensemble selon l'une des revendications précédentes, **caractérisé en ce qu'**un support (82) est prévu pour la séparation de poêlon (22), le support (82) étant pourvu d'un dispositif de charge sans câble, en particulier d'une bobine d'induction (80) qui peut coopérer avec la bobine de charge (78) d'une séparation de poêlon (22) agencée dans le support (82).
